# EUROPEAN PATENT APPLICATION

(11) **EP 2 498 030 A2**
(43) Date of publication of application: **12.09.2012**
(21) Application number: 10795191.5
(22) Date of filing: 04.11.2010
(51) Int. Cl.: F25C 5/00

(54) **MOTOR-DRIVEN ICE DISPENSER FOR REFRIGERATORS**

(30) Priority: 04.11.2009 BR PI0904660
(71) Applicant: Whirlpool S.A., 04578-000 São Paulo - SP (BR)
(72) Inventor: DE PAULA, Bruno Henrique Kikumoto, Zona Industrial Norte 89219-720 Joinville, SC (BR); BORGES, João Eduardo Santana, 89204-060 América, Joinville SC. (BR)
(74) Representative: Pulieri, Gianluca Antonio
(86) International application number: PCT/BR2010/000363
(87) International publication number: WO 2011/054070

(57) **Abstract**

The present invention relates to a motor ice dispenser for refrigerators comprising an electric motor (3) programmed to have two operating velocities during the opening of a door (1), for the release of a piece of ice (2) for the costumer. In the beginning of the door (1) opening, the electric motor (3) operates at a low speed and high torque, and, at the end of the door (1) opening, the electric motor (3) operates at a high speed and low torque.

## Description

Field of the Invention

The present invention relates to a motor ice dispenser for refrigerators, said dispenser being provided with an electric motor with different usage velocities.

Background of the Invention

The household electric appliances have been aggregating various facilities due to the technological advance, to the manufacturers constant innovation process and to the costumers' requirements. Among the multiple existing examples, one can point out the ice dispensers in refrigerators and fridges. These dispensers provide ice in the form of cubes or other forms as appropriate, without the costumer having to open the fridge door, as is the case with traditional refrigerators or fridges. Thus, the fridge, apart from its major function of storing food, increasing its life, possesses a facility that distinguishes it and makes it unique.

Normally, these dispensers have an activation element that serves to open a door, through which the ice falls. This activation element is normally a kind of extended arm, and, when the costumer presses said arm with a glass, for example, a piece of ice falls into the glass via the door opening. Said door prevents the ambient air from contacting the air inside the refrigerator, avoiding the unnecessary transfer of heat and moisture.

As far as the technical details for providing said dispensers are concerned, the state of the art has several examples. In most cases, the dispensers comprise solenoids or electric motors that perform the opening of the door which releases the piece of ice.

The dispensers provided with solenoid have a plurality of drawbacks, the main ones being: the noise generated when the dispenser is being used and the high consumption of electric power. In this aspect, multiple solutions have been presented aiming at the replacement of the solenoid by a device capable of performing the same functions, but with a lower power waste.

One of the solutions aiming at the replacement of the solenoid is found in document US 2007/0256442, which describes a motor ice dispenser door comprising a shaft coupled to said door, a motor coupled to said shaft and an resilient element associated with the door. In this manner, the motor turns the shaft, and the latter turns the door, opening it. The resilient element, which, in the preferred embodiment described in this US document, is a spring, has the function of keeping the door closed. The motor is driven through an electric switch, which may be a button or another appropriate device. The motor used is an asynchronous alternating current motor.

Another example of the state of the art for the replacement of the solenoid in ice dispensers is found in document US 2006/0201193. According to the description of this document, when the user presses an arm with a glass or another similar object, an electric motor is driven causing a small gear arranged in its shaft to turn. Thus, a shaft connected with said gear also turns, causing a second gear to turn as well. This second gear is operatively connected to the door that releases the ice cube. Thus, the subject matter of this document of the state of the art makes use of the association of gear and shafts to open the door and make the piece of ice available to the user.

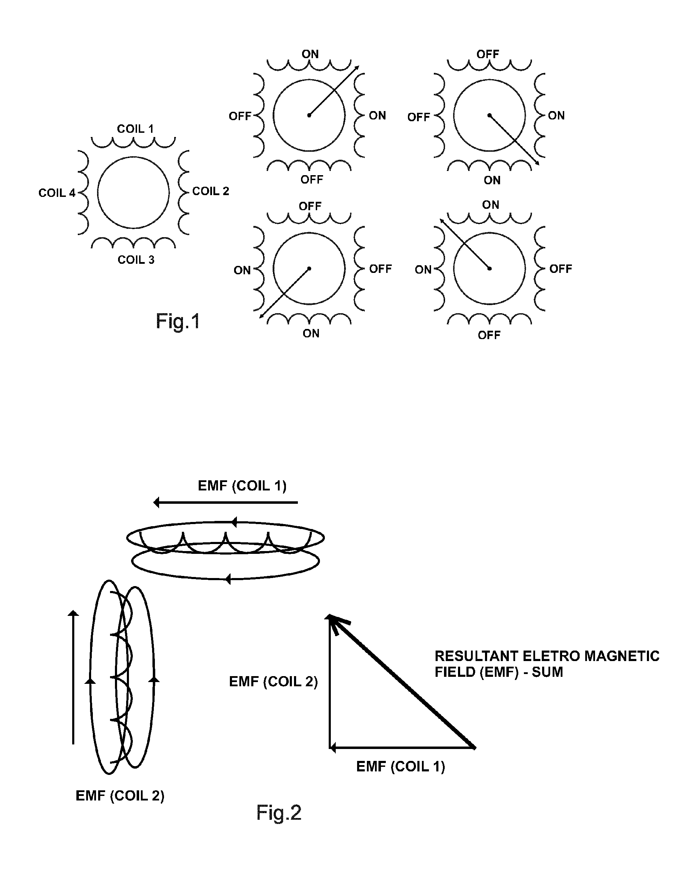

These two examples mentioned have the disadvantage of using a relatively complex mechanical apparatus. In this sense, an ice dispenser has been developed comprising a pitch motor, more precisely a bipolar, full-pitch permanent magnet pitch motor. Thus, as can be seen in Figure 1, two coils are activated (or turned on) at the same time, so that the rotor will have 90□ pitches and its magnetic poles will be located between the coils. The advantage of the dispenser over the ones previously mentioned is that the pitch motor provides more precisely for the control of the door position without a hardware and software complex implementation.

In addition, the use of a bipolar, full-pitch pitch motor is particular advantageous having in mind that the activation of two coils simultaneously increases the torque, since the resulting magnetic field will be the sum of the electromagnetic fields of each coil. Figure 2 illustrates this behavior of the magnetic field and the electric current.

The dispensers using a pitch motor usually have the door joined to its shaft, such that the rotation of the motor shaft is directly transformed into the rotation of the door, without the need for using intermediate elements (e.g., gears).

Although the use of the pitch motor represents an advance over the other examples of the state of the art mentioned, its use still has a considerable disadvantage, that is: high power consumption. This disadvantage entails other disadvantages since the high power consumption is directly converted into a cost increase, related to the need for using large power supplies. Also, this excessive power consumption causes the dispenser not to be rated as a low power product for some applications. As such, the dispenser needs to pass tests in order to be approved, which increases its cost, apart from the fact that, in some cases, the dispenser has to incorporate specific insulating materials which also increase the cost of the end product.

As such, an ice dispenser for fridges and/or refrigerators must exist that comprises a simple mechanism and, at the same time, a motor spending little power. In addition to these features, it is still desirable for this dispenser to have low cost, through the optimization of its mechanism and related devices.

Obj ects of the Invention

With the state of the art problems in mind, it is an object of this invention to provide an ice dispenser for refrigerators that comprises both a simple and a low cost door opening mechanism.

Summary of the Invention

The objects of this invention are achieved through an ice dispenser for refrigerators comprising: a door that seals the refrigerator inner environment to the environment external to the refrigerator, the door being able to release pieces of ice upon its opening; an electric motor operatively connected to the door, the electric motor being responsible for said door opening motion.

The electric motor is able to start the door opening at a low speed and high torque and to end the door opening at a high speed and low torque.

Brief Description of the Drawings

The figures show:

Figure 1 - illustrates the windings and the sequence of motions of the motor used in the state of the art dispensers;

Figure 2 - illustrates in a schematic manner the behavior of the magnetic field in a permanent magnet pitch motor of the bipolar, full-pitch type, used in state of the art ice dispensers;

Figure 3 - illustrates a schematic perspective view of the preferred embodiment of the present invention;

Figure 4 - illustrates a schematic side view of the preferred embodiment of the present invention;

Figure 5 - illustrates the windings and the sequence of motions of the pitch motor used in the present invention; and

Figure 6 - illustrates a curve that represents the general behavior of the torque resulting from the speed in pitch motors.

Detailed Description of the Invention

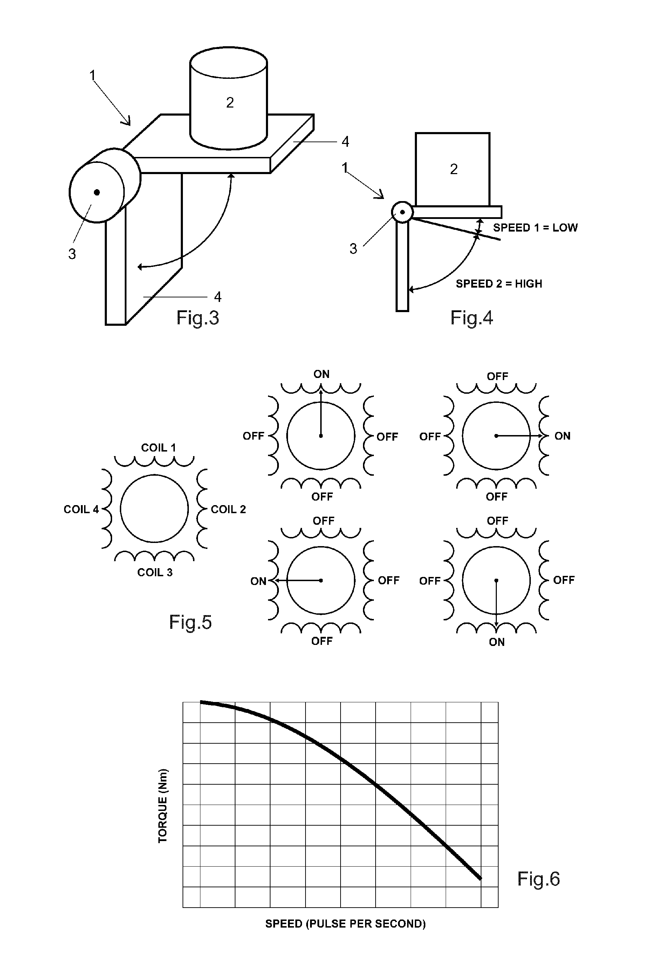

The ice dispenser of the present invention is schematically represented in Figures 3 and 4. In these figures, some parts of the dispenser are omitted since the aim is to show in an easily understandable way the most relevant elements for the present invention.

The ice dispenser of the present invention is preferably used in refrigerators and similar devices, that is, in refrigerators, freezers, fridges, among others. Other applications, however, must be considered, provided that they are covered by the protection scope of the appended claims.

As well as the state of the art dispensers, the ice dispenser of the present invention preferably has a space for the costumer to put a glass or another similar receiver, in order to add pieces of ice to the inside of said receiver or glass. In addition, the ice dispenser of the present invention may be located in any region of the refrigerator door, or even next to its side surfaces, but this feature should not limit the scope of the present invention.

Regarding the driving means of this dispenser, the most varied mechanisms may be used. As such, the piece of ice 2 can be made available to the costumer by means of the driving of a lever, through a button or through an arm that may be pushed by a glass that the costumer is using. The important feature of this driving means is that it must be in electric connection with electric motor 3, so that its actuation activates motor 3 and, as a consequence, opens door 1 for the release of piece of ice 2.

The dispenser of the present invention comprises a door 1, already mentioned, the function of which is to seal the refrigerator inner environment to the refrigerator outer environment. In other words, door 1 is the interface between the ambient air and the air inside the refrigerator and it must have sealing means, since the ambient air may interfere on the air moisture from the refrigerator inside. Any applicable sealing means may be used in the dispenser of the present invention, from polymeric materials to even the use of door 1 dimensions relative to the opening through which piece of ice 2 is made available to the customer.

As can be seen from Figures 3 and 4, door 1 is substantially "L" shaped or has the form of a "half-cross". This shape consists of two parallelepiped projections having a vertex in common, with a 90□ spacing between them. Also, the present invention contemplates the use of a door having 3 projections that share the same vertex and are spaced about 120□ from one another.

As can be noted, door 1 may take on various forms, without its functionality in the context of the present invention being harmed because of this. The relevant feature that door 1 must comprise is a point in common to all projections, that is, a vertex in common from which the projections originate, since they are the projections that will effectively perform the function of sealing the refrigerator inner environment to the environment external to the refrigerator.

Still with reference to Figures 3 and 4, the ice dispenser of the present invention comprises an electric motor 3 responsible for door 1 opening motion. This electric motor 3 is preferably a pitch motor, desirably a permanent magnet, unipolar and full-pitch motor.

Electric motor 3 is further operatively connected to door 1, that is, the shaft of electric motor 3 is coupled to the vertex common to projections 4. Thus, electric motor 3 has the motion of its shaft directly transmitted to door 1, without the need for a mechanical system for transmitting this motion, as is the case with the subject matter of document US 2006/0201193.

In relation with the operation of electric motor 3, reference is made to Figure 5, which illustrates the sequence of motions by motor 3. In Figure 5, the coils of electric motor 3 stator and the direction of the rotor north pole are schematically represented. As can also be seen, a single coil 5 is activated, or energized, at one time.

On the other hand, the state of the art embodiment illustrated in Figure 1 uses a pitch motor that activates two coils at a time, which, as has already been said, leads to a higher power consumption. The present invention has thus the advantage of spending little power through the activation of a single coil at a time. However, it must be considered that the activation of only one coil at a time for executing the electric motor 3 rotation has less torque as compared with the state of the art that uses a pitch motor.

To compensate for this feature of electric motor 3 construction, the inventors have created a differentiated operation scheme for the opening of door 1 by electric motor 3. Considering the torque curve resulting from the speed of a pitch motor, as illustrated in Figure 6, one can note that a reduction in speed, in pulses per second (PPS), implies the increase in the torque. Having this in mind, the inventors have decreased the speed of electric motor 3 to open door 1. Thus, the loss of torque resulting from the activation of only a coil at a time would be compensated for by the decrease in speed.

However, in order that the opening of the door will not become so slow, causing dissatisfaction in costumers, the inventors have developed the following methodology: electric motor 3 is programmed to start opening door 1 at a high speed and a low torque. This methodology can be more clearly noted through the indications present in Figure 4.

In addition, it has been observed that a higher torque was only necessary at the beginning of door 1 opening, since it is at this moment that electric motor 3 has to overcome the inertia to perform the motion. Once taken from rest, electric motor 3 can perform the last part of door 1 opening with a reduced torque and at a higher speed.

In an alternative embodiment of the present invention, this higher torque can be used when door 1 starts being closed to assure that the inertia is overcome more easily.

Briefly, when the costumer drives the electric motor through any driving means (button, arm, switch, lever, etc.), a control system drives and sends pulses to electric motor 3, entailing the rotation of its shaft, which implies the rotation of door 1. When the opening begins, that is, to take door 1 from rest, the torque resulting from the motion of electric motor 3 shaft is higher, its velocity being lower. After a predetermined period, the torque becomes lower, and its velocity higher, thus ending the opening motion. The opening motion encompasses preferably 90□ and, after ended, the costumer will have a piece of ice 2 in his glass or another receiver.

The control system of the present invention is preferably a system that drives and turns off the motor, in addition to controlling the velocities adopted by the motor during the opening and the closing of door 1 of the present invention dispenser. Still preferably, this control system comprises a microcontroller or a microprocessor associated with a circuit for directly driving ("driver"), since many microcontrollers and microprocessors do not have power enough for directly driving one of its output pins. Although the present invention comprises this preferred embodiment, one has to have in mind that other implementation possibilities of a control system to control the dispenser may be used without harming the protection scope of the invention.

In a preferred embodiment, in the portion at the beginning of door 1 opening, electric motor 3 operates at 50 PPS (pulses per second), performing 100 pitches and having a torque that may reach 0,300 Nm. In the portion at the end of door 1 opening, electric motor 3 operates a 800 PPS, performing 700 pitches and having a torque that may reach 0,200 Nm. The values mentioned are preferable e do not represent any limitation to the protection scope of the present invention, since other values may be used, provided that the essential features of the invention comply with the definitions of the appended claims.

The value, in degrees, corresponding to the start of door 1 opening and the end of the door opening, is varied according to the other values (velocity, torque and the number of pulses per second), and, for each combination of values, there is an arch corresponding to the motion in the beginning and the end of the door opening. The arches shown in Figure 4, which correspond to the beginning and the end of the opening, are merely illustrative and intend to represent the concept of the present invention.

Thus, because the present invention uses an electric motor 3 that activates a coil at a time, rather than two coils as is the case with state of the art dispensers, a substantial power saving is provided. Also, the torque compensation by choosing two velocity modes for opening door 1 (beginning and end) results in an optimization of the usage of electric motor 3 as a source of power saving, as compared with the state of the art examples. It should be remembered that the reduction in the consumption of power is directly related to the cost reduction, which is one more benefit brought about by the present invention.

Also, with the reduction in power consumption, the dispenser of the present invention can be considered as a low power product, that is, a product that spends less than 15 W of power in its operation. Preferably, the dispenser of the present invention spends an average power of 4,6 W. Finally, one can note the simple and efficient structure that the dispenser of the present invention has, which can be noted by the direct association in which electric motor 3 is provided relative to door 1, without the need for using additional shafts and gears to transmit the motion generated by motor 3.

## Claims

1. An ice dispenser for refrigerators, **CHARACTERIZED in that** it comprises:
a door (1) that seals the refrigerator inner environment to the environment external to the refrigerator, the door being able to release pieces of ice (2) upon its opening;
at least one electric motor (3) operatively connected to door (1), electric motor (3) being responsible for the opening motion of said door (1),
and electric motor (3) being programmed to start the opening of door (1) at a low speed and a high torque and to end the opening of door (1) at a high speed and low torque.

2. An ice dispenser for refrigerators, according to claim 1, **CHARACTERIZED in that** electric motor (3) is a pitch motor.

3. An ice dispenser for refrigerators, according to claim 1, **CHARACTERIZED in that** electric motor (3) is a unipolar full-pitch motor.

4. An ice dispenser for refrigerators, according to claims 1 and 2, **CHARACTERIZED in that** electric motor (3) operates at between 50 and 800 pulses per second from the beginning to the end of the door (1) opening.

5. An ice dispenser for refrigerators, according to claims 1 and 2, **CHARACTERIZED in that** electric motor (3 performs between 100 e 700 pitches from the beginning to the end of the door (1) opening.

6. An ice dispenser for refrigerators, according to claims 1 and 2, **CHARACTERIZED in that** the torque of electric motor (3) during the beginning of the door (1) opening and during the end of the door (1) opening is between 0,200 Nm and 0,300 Nm.

7. An ice dispenser for refrigerators, according to claim 1, **CHARACTERIZED in that** electric motor (3) has the motion of its shaft directly transmitted to door (1).

8. An ice dispenser for refrigerators, according to claims 1 and 7, **CHARACTERIZED in that** door (1) is cross-shaped, the shaft of electric motor (3) coupled to door (1) central point.

9. An ice dispenser for refrigerators, according to claims 1 and 4, **CHARACTERIZED in that** electric motor (3) receives the pulses through a control system.
